# EUROPEAN PATENT APPLICATION

(11) **EP 1 277 767 A1**
(43) Date of publication of application: **22.01.2003**
(21) Application number: 02715871.6
(22) Date of filing: 22.01.2002
(51) Int. Cl.: C08F 8/00, C08G 85/00, B01J 20/26

(54) **SOLVENT ABSORBING RESIN AND METHOD FOR PREPARATION THEREOF**

(30) Priority: 22.01.2001 JP 2001013773; 13.03.2001 JP 2001071224; 13.03.2001 JP 2001071077; 13.03.2001 JP 2001071078; 13.03.2001 JP 2001071222
(71) Applicant: Sony Corporation, Tokyo 141-0001 (JP)
(72) Inventor: INAGAKI, Yasuhito, Tokyo 141-0001 (JP); WATANABE, Haruo, Tokyo 141-0001 (JP)
(74) Representative: Müller, Frithjof E., Dipl.-Ing.
(86) International application number: JP0200435
(87) International publication number: WO02057323

(57) **Abstract**

The present invention is relative with an organic liquid absorbent resin comprised of a water-insoluble resin to which have been introduced hydrophilic polar groups. This organic liquid absorbent resin is produced on introducing hydrophilic groups to the water-insoluble resin. This organic liquid absorbent resin is inexpensive, high in safety and superior in is performance in absorbing not only hydrophilic solvents but also oleophilic solvents.

## Description

### Technical Field

This invention relates to a solvent absorbent resin comprised of a water-insoluble resin, into which hydrophilic polar groups have been introduced, and a method for producing the solvent absorbent resin. This invention also relates to an absorbent material, capable of absorbing various organic liquids, for use in preventing or combating dispersion on the occasion of leakage of organic liquids in plants, and more particularly to an absorbent material for absorbing organic liquids, which is ease to handle for transport or storage, and a method for producing the absorbent material.

### Background Art

The liquid absorbent resin, such as water- or oil-absorbent resin, is routinely produced by adding a cross-linkable monomer to a monomer having solubility for a target liquid for polymerization. In this case, the monomer as the feedstock is relatively expensive, in most cases, and the feedstock monomer is partially left over unpolymerized in the product even after polymerization, thus raising problems in connection with cost and safety. Moreover, the state-of-the-art liquid absorbent resin is designed and manufactured with absorption of certain predetermined liquid as a target, so that the liquid absorbent performance for liquids other than the targeted liquid is lowered drastically. However, in practice, since it is required of the liquid absorbent resin in many cases to be able to absorb plural sorts of liquids simultaneously, such a liquid absorbent resin having wide adaptability has strongly been desired.

On the other hand, the throughput of a product employing resins or plastics having aromatic rings or conjugated diene in molecules, such as ABS (acrylonitrile-butadiene- styrene) resin, SAN (styrene- acrylonitrile) resin, polyacrylonitrile-butadiene or polyethylene terephthalate (PET), is increasing, such that the amount of waste materials made from these materials is also increasing. Consequently, there is an increasing need towards efficacious utilization of such waste materials to meet the increasing interest for protection of the global environment.

Under this situation, it is thought to be desirable to enhance the possibility of further re-utilization of these waste materials and to conduct researches towards modification of the materials to products with higher added value.

Meanwhile, the polymer-based waste materials are disposed of roughly by three types of techniques, namely land-filling, incineration and re-melting. Of these, land-filling and incineration account for approximately 90% of the total amount of disposal of the waste material, meaning that most of the waste material is not re-used.

As the method of recycling the polymer waste material, such a method of melting by heating and re-molding is routinely employed, insofar as the thermoplastic resin is concerned. In this case, a lot of problems are presented, such as thermal deterioration, for example the lowering of the molecular weight or oxidation of the polymer, admixture of foreign matter, such as dust and dirt, or admixture of resins containing various colorants, which leads to the necessity of color matching. That is, in recycling polymer waste materials of the general-purpose plastics or resins by heating or melting, processing techniques or costs pose serious impediments.

Moreover, the state-of-the-art organic liquid absorbent resin is designed and manufactured with absorption of certain predetermined organic liquids as a target, so that the liquid absorbent performance for liquids other than the targeted liquids is lowered drastically. However, in practice, since it is frequently required of the liquid absorbent resin to be able to absorb plural sorts of organic liquids simultaneously, such a liquid absorbent resin having wide adaptability also has strongly been desired.

In addition, for increasing the ease in handling for transport or preservation of the organic liquid absorbent material, a further improvement is desired of the organic liquid absorbent material to prevent it from becoming collapsed during transport or storage.

Sand bags are routinely used for preventing the flooding of the sea, rivers or lakes in inundation disasters, and are produced by charging the soil into a hemp pouch. Recently, from the perspective of risk management, sand bags are equipped for preventing organic liquids, stored in plants on the occasion of disasters, such as earthquakes, in order to prevent organic liquids stored in plants from leaking from a storage area to outside the plant. However, the component of the conventional sand bags is mostly soil, although the water-absorbent resin is used only in limited cases. Consequently, the conventional sand bags are only poor in absorbency with respect to the organic liquid, and hence are unable to prevent liquid dispersion effectively.

These sand bags are both bulky and heavy and hence are difficult to transport. Moreover, should the organic liquid absorbent material be transported from distant sites, it is necessary to use a vehicle for such transport, while the material needs to be loaded/unloaded by a labor-consuming operation. On outbreak of a disaster, the organic liquid absorbent material must be quickly transported at a required time to a required site. However, such prompt transport of a sufficient quantity of the organic liquid absorbent material is impeded by its poor transportability. There is also a problem that the organic liquid absorbent material cannot be installed on a site to which it is risky for an operator to transport the material. Moreover, the component of the conventional sand bags is mostly soil, although the water-absorbent resin is used only in limited cases. Consequently, the conventional sand bags are only poor in absorbency with respect to organic liquids, and hence are unable to prevent dispersion of the organic liquids effectively

### Disclosure of the Invention

It is therefore an object of the present invention to provide a liquid absorbent resin which is inexpensive, high in safety, superior in its property of absorbing both hydrophilic and oleophilic solvents, and having wide adaptability, and a method for the preparation of the liquid absorbent resin.

It is another object of the present invention to provide a method for effective utilization of used water-insoluble resin obtained from waster general-purpose plastics for conversion to a high added-value product, and a product obtained by such method.

It is a further object of the present invention to provide an organic liquid absorbent material which is small in size and weight during transport and which absorbs the organic liquid in use to achieve the requirements for size or weight and the outer shape followup function sufficiently for use as substitute for sand bags.

It is a further object of the present invention to exploit a waste polymer material, such as water-insoluble resin, or an inorganic waste solid material, such as metal or ceramics, which were difficult to dispose of as waste material, to contribute to protection of the global environment.

It is a further object of the present invention to provide an organic liquid absorbent material which is inexpensive and high in safety, has a wide field of application and which is easy to handle in transport or storage, and a method for the preparation of the organic liquid absorbent material.

It is yet another object of the present invention to provide a method for transporting the organic liquid absorbent material promptly and in large quantities at a time even to a site to which it is otherwise difficult for an operator to transport the material.

The present inventors have conducted eager researches towards accomplishing the above object and found that, by introducing hydrophilic polar groups to the water-insoluble resin obtained from general-purpose monomers, the resulting resin exhibits absorbency applicable to a wide variety of solvents. The present inventors have conducted further researches and ultimately arrived at the present invention.

That is, the present invention provides a solvent absorbent resin formed of a water-insoluble resin to which have been introduced hydrophilic polar groups.

The hydrophilic polar groups are at least one of a sulfo group which may be in the form of a salt, a sulfuric acid group which may be in the form of a salt, a carboxylic, an amide or a nitro groups, which may be in the form of a salt, a -PO(OH)₂ group, which may be in the form of a salt, a -OPO(OH)₂ group, which may be in the form of a salt, a hydroxyl group, which may be in the form of a salt, and an aminic base group, which may be in the form of a salt.

The hydrophilic polar groups are contained in an amount of 0.1 to 99 mol% in the entire monomer units in the water-insoluble resin.

The water-insoluble resin contains at least one of an aromatic ring and a conjugated diene in a main chain and/or a side chain thereof.

At least one of the aromatic ring and the conjugated diene contained in the water-insoluble resin accounts for 1 to 100 mol% in the entire monomer units in the resin.

The present invention also provides a solvent absorbent resin formed of a used water-insoluble resin to which have been introduced hydrophilic polar groups.

The hydrophilic polar groups are at least one of a sulfo group which may be in the form of a salt, a sulfuric acid group which may be in the form of a salt, a carboxylic, an amide or a nitro groups, which may be in the form of a salt, a-PO(OH)₂ group, which may be in the form of a salt, a -OPO(OH)₂ group, which may be in the form of a salt, a hydroxyl group, which may be in the form of a salt, and an aminic base group, which may be in the form of a salt.

The hydrophilic polar groups are contained in an amount of 0.1 to 99 mol% in the entire monomer units in the water-insoluble resin.

The water-insoluble resin contains at least one of an aromatic ring and a conjugated diene in a main chain and/or a side chain thereof.

At least one of the aromatic ring and the conjugated diene contained in the water-insoluble resin accounts for 1 to 100 mol% in the entire monomer units in the resin.

The present invention also provides a method for producing a solvent absorbent resin comprising introducing hydrophilic groups to a water-insoluble resin.

The hydrophilic polar groups are at least one of a sulfo group which may be in the form of a salt, a sulfuric acid group which may be in the form of a salt, a carboxylic, an amide or a nitro groups, which may be in the form of a salt, a -PO(OH)₂ group, which may be in the form of a salt, a -OPO(OH)₂ group, which may be in the form of a salt, a hydroxyl group, which may be in the form of a salt, and an aminic base group, which may be in the form of a salt.

The hydrophilic polar groups are contained in an amount of 0.1 to 99 mol% in the entire monomer units in the water-insoluble resin.

The water-insoluble resin contains at least one of an aromatic ring and a conjugated diene in a main chain and/or a side chain thereof.

At least one of the aromatic ring and the conjugated diene contained in the water-insoluble resin accounts for 1 to 100 mol% in the entire monomer units in the resin.

The present invention also provides a method for producing a used solvent absorbent resin comprising introducing hydrophilic groups to a water-insoluble resin.

The hydrophilic polar groups are at least one of a sulfo group which may be in the form of a salt, a sulfuric acid group which may be in the form of a salt, a carboxylic, an amide or a nitro groups, which may be in the form of a salt, a -PO(OH)₂ group, which may be in the form of a salt, a -OPO(OH)₂ group, which may be in the form of a salt, a hydroxyl group, which may be in the form of a salt, and an aminic base group, which may be in the form of a salt.

The hydrophilic polar groups are contained in an amount of 0.1 to 99 mol% in the entire monomer units in the water-insoluble resin.

The water-insoluble resin contains at least one of an aromatic ring and a conjugated diene in a main chain and/or a side chain thereof.

At least one of the aromatic ring and the conjugated diene contained in the water-insoluble resin accounts for 1 to 100 mol% in the entire monomer units in the resin.

The present invention also provides a water-insoluble resin into which hydrophilic groups have been introduced. With the absorbent unit, comprised of a water-insoluble resin, co-existing with support, the unit is not prone to collapsing during transport or storage. Moreover, the organic liquid absorbent resin is supported by the support to prevent the unit from becoming collapsed during transport or storage.

The present invention provides an organic liquid absorbent unit comprising an organic liquid absorbent resin comprised of a used water-insoluble resin having hydrophilic polar groups introduced thereto and a support. This support is constituted by a flexible netted product and supports the organic liquid absorbent resin.

The organic liquid absorbent unit contains a solid substance having a specific gravity not less than unity. As this solid substance, having a specific gravity not less than unity, natural ores having a specific gravity not less than unity are used. The solid substance may be a waste material having a specific gravity not less than unity or a waste material bonded together and having a specific gravity not less than unity. A waste material, having a specific gravity not less than unity, may also be used.

The organic liquid absorbent unit of the present invention includes an organic liquid absorbent resin comprised of a used water-insoluble resin, to which hydrophilic polar groups have been introduced, and a support. The support is formed by a flexible netted product. The organic liquid absorbent resin is supported by the support.

The organic liquid absorbent unit contains a solid substance having a specific gravity not less than unity. As this solid substance, having a specific gravity not less than unity, natural ores having a specific gravity not less than unity are used. The solid substance may also be a waste material having a specific gravity not less than unity or a waste material bonded together and having a specific gravity not less than unity. A waste material, having a specific gravity not less than unity, may also be used.

The present invention also provides a method for producing an organic liquid absorbent unit, including charging an organic liquid absorbent resin, obtained on introducing hydrophilic groups to a water-insoluble resin, and a support, into an organic liquid permeating pouch.

The support is a flexible netted product. The organic liquid absorbent resin is supported by the support. In the organic liquid permeating pouch is charged one of a solid substance having a specific gravity not less than unity, a solid substance comprised of natural ores having a specific gravity not less than unity, a solid substance comprised of a waste material having a specific gravity not less than unity, a solid substance comprised of a waste material, bonded together, and having a specific gravity not less than unity, a solid substance comprised of a magnetic waste material having a specific gravity not less than unity.

The present invention also provides an organic liquid absorbent unit containing a used organic liquid absorbent resin, to which hydrophilic polar groups have been introduced, and a solid substance having a specific gravity not less than unity. As the solid substance, a solid substance comprised of natural ores having a specific gravity not less than unity, a solid substance comprised of a waste material having a specific gravity not less than unity, a solid substance comprised of a waste material, bonded together, and having a specific gravity not less than unity, may be used.

The present invention also provides a method for producing an organic liquid absorbent unit comprising charging an organic liquid absorbent resin, obtained on introducing hydrophilic groups to a used water-insoluble resin, into an organic liquid permeating pouch.

The hydrophilic polar groups, used here, are at least one of a sulfo group which may be in the form of a salt, a sulfuric acid group which may be in the form of a salt, a carboxylic, an amide or a nitro groups, which may be in the form of a salt, a -PO(OH)₂ group, which may be in the form of a salt, a -OPO(OH)₂ group, which may be in the form of a salt, a hydroxyl group, which may be in the form of a salt, and an aminic base group, which may be in the form of a salt. Preferably, the hydrophilic polar groups are contained in an amount of 0.1 to 99 mol% in the entire monomer units in the water-insoluble resin.

Preferably, the water-insoluble resin contains at least one of an aromatic ring and a conjugated diene in a main chain and/or a side chain thereof, and at least one of the aromatic ring and the conjugated diene contained in the water-insoluble resin accounts for 1 to 100 mol% in the entire monomer units in the resin.

Into the water-transmitting pouch is charged a solid substance having a specific gravity not lower than unity. This solid substance may be one of a solid substance comprised of natural ores having a specific gravity not less than unity, a solid substance comprised of a waste material having a specific gravity not less than unity, a solid substance comprised of a waste material, bonded together, and having a specific gravity not less than unity, and a solid substance comprised of a magnetic waste material having a specific gravity not less than unity.

The present invention also provides a method for producing an organic liquid absorbent unit comprising charging an organic liquid absorbent resin, obtained on introducing hydrophilic groups to a used water-insoluble resin, into an organic liquid permeating pouch. The hydrophilicpolar groups are at least one of a sulfo group which may be in the form of a salt, a sulfuric acid group which may be in the form of a salt, a carboxylic, an amide or a nitro groups, which may be in the form of a salt, a -PO(OH)₂ group, which may be in the form of a salt, a -OPO(OH)₂ group, which may be in the form of a salt, a hydroxyl group, which may be in the form of a salt, and an aminic base group, which may be in the form of a salt. Preferably, the hydrophilic polar groups are contained in an amount of 0.1 to 99 mol% in the entire monomer units in the water-insoluble resin.

Preferably, the water-insoluble resin contains at least one of an aromatic ring and a conjugated diene in a main chain and/or a side chain thereof, and at least one of the aromatic ring and the conjugated diene contained in the water-insoluble resin accounts for 1 to 100 mol% in the entire monomer units in the resin.

Into the water-transmitting pouch is charged a solid substance having a specific gravity not lower than unity. This solid substance may be one of a solid substance comprised of natural ores having a specific gravity not less than unity, a solid substance comprised of a waste material having a specific gravity not less than unity, a solid substance comprised of a waste material, bonded together, and having a specific gravity not less than unity, and a solid substance comprised of a magnetic waste material having a specific gravity not less than unity.

The present inventors conducted researches into handling performance of the organic liquid absorbent unit during transport and storage, and have found that, if an attractable substance exists together with the absorbent unit, a large quantity of the organic liquid absorbent units can be transported promptly at a time without resorting to the human power. If, for example, a magnetic substance is used as the attractable material, it is possible to transport a large quantity of the organic liquid absorbent units promptly at a time by a crane or a conveyor by magnetically attracting the organic liquid absorbent units. Moreover, if inorganic solid waste materials, such as metal or ceramics, are re-used as resource re-utilization, it is beneficial for protection of global resources, in consideration that these materials represent components difficult to dispose of in the disintegration of electrical equipment.

The present invention also provides an organic liquid absorbent unit containing an organic liquid absorbent resin, to which the hydrophilic polar groups have been introduced, and an attractable substance, which attractable substance may be one of a magnetic material, a magnetic waste material and a waste material bonded together.

The organic liquid absorbent unit of the present invention includes a support which is a flexible netted product. The organic liquid absorbent resin is supported by a support.

The present invention also provides an organic liquid absorbent unit comprised of an organic liquid absorbent resin made up by a used water-insoluble resin, int which hydrophilic polar groups have been introduced, and an attractable substance. The attractable substance is a magnetic substance which is comprised of a waste material bonded or not bonded together.

The organic liquid absorbent unit also includes a support comprised of a flexible netted product. The organic liquid absorbent resin is supported by a support. The present invention also provides a method for producing an organic liquid absorbent unit comprising introducing an organic liquid absorbent resin obtained on introducing hydrophilic groups to a water-insoluble resin, and an attractable substance, into an organic liquid permeating pouch.

The attractable substance may be a magnetic substance, a waste material or a waste material bonded together.

The hydrophilic polar groups are at least one of a sulfo group which may be in the form of a salt, a sulfuric acid group which may be in the form of a salt, a carboxylic, an amide or a nitro groups, which may be in the form of a salt, a -PO(OH)₂ group, which may be in the form of a salt, a -OPO(OH)₂ group, which may be in the form of a salt, a hydroxyl group, which may be in the form of a salt, and an aminic base group, which may be in the form of a salt. Preferably, the hydrophilic polar groups are contained in an amount of 0.1 to 99 mol% in the entire monomer units in the water-insoluble resin.

Preferably, the water-insoluble resin contains at least one of an aromatic ring and a conjugated diene in a main chain and/or a side chain thereof, and at least one of the aromatic ring and the conjugated diene contained in the water-insoluble resin accounts for 1 to 100 mol% in the entire monomer units in the resin.

The support is charged into the organic liquid permeating pouch to form an organic liquid absorbent unit, and is formed by a flexible netted product. The organic liquid absorbent resin is supported by the support.

The present invention also provides a method for producing an organic liquid absorbent unit comprising introducing an organic liquid absorbent resin obtained on introducing hydrophilic groups to a water-insoluble resin, and an attractable substance, into an organic liquid permeating pouch. The magnetic substance is a waste material which may be bonded together.

The hydrophilic polar groups are at least one of a sulfo group which may be in the form of a salt, a sulfuric acid group which may be in the form of a salt, a carboxylic, an amide or a nitro groups, which may be in the form of a salt, a -PO(OH)₂ group, which may be in the form of a salt, a -OPO(OH)₂ group, which may be in the form of a salt, a hydroxyl group, which may be in the form of a salt, and an aminic base group, which may be in the form of a salt. Preferably, the hydrophilic polar groups are contained in an amount of 0.1 to 99 mol% in the entire monomer units in the water-insoluble resin.

Preferably, the water-insoluble resin contains at least one of an aromatic ring and a conjugated diene in a main chain and/or a side chain thereof, and at least one of the aromatic ring and the conjugated diene contained in the water-insoluble resin accounts for 1 to 100 mol% in the entire monomer units in the resin.

The organic liquid permeating pouch is charged into the support, which is a flexible netted product. The organic liquid absorbent resin is supported by the support.

By transporting, under suction, the organic liquid absorbent unit, in which not only the organic liquid absorbent resin but also the attractable substance, present in the organic liquid permeating pouch, a large quantity of the organic liquid absorbent units can be transported promptly at a time without resorting to human labor. For example, if a magnetic substance is used as an attractable substance, the organic liquid absorbent units can be transported promptly at a time in large quantities, by a crane or a conveyor, even to places hazardous for human operators.

With use of the organic liquid absorbent resin, obtained on introducing an organic liquid absorbent resin to the water-insoluble resin, a wide variety of organic liquids can be absorbed. Moreover, such an organic liquid absorbent unit can be provided which is small in weight and size during transport, and absorbs the organic liquids in use to meet the requirements as to weight ands size and as to shape followup sufficiently the organic liquid absorbent unit is also beneficial in contributing to protection of global environment by re-utilization of the polymer waste material, such as waste resin, which proved a nuisance as waste, can be re-used as resources.

The present invention also provides a method for transporting an organic liquid absorbent unit comprising sucking an organic liquid absorbent resin, comprised of a water-insoluble resin, to which hydrophilic polar groups have been introduced, and a magnetic substance.

The water-insoluble resin, comprised of a water-insoluble resin, to which hydrophilic polar groups have been introduced, and the magnetic substance, is transported as it is sucked magnetically.

The magnetic substance is a waste magnetic substance or a waste magnetic substance bonded together.

The organic liquid absorbent unit further includes a support which support is a flexible netted product.

In the method for transporting the organic liquid absorbent unit, the organic liquid absorbent resin is supported by the support.

The present invention also provides a method for transporting an organic liquid absorbent unit comprising sucking and transporting an organic liquid absorbent resin, comprised of a used water-insoluble resin, to which hydrophilicpolar groups have been introduced, and a magnetic substance.

The water-insoluble resin, comprised of the used water-insoluble resin, to which hydrophilic polar groups have been introduced, and the magnetic substance, is transported as it is sucked magnetically.

The magnetic substance is a waste magnetic substance or a waste magnetic substance bonded together.

The organic liquid absorbent unit further includes a support, which support is a flexible netted product.

In the method for transporting the organic liquid absorbent unit, the organic liquid absorbent resin is supported by the support.

Other objects, features and advantages of the present invention will become more apparent from reading the embodiments of the present invention as shown in the drawings.

### Brief Description of the Drawings

Fig.1 is a cross-sectional view showing an organic liquid absorbent material of the present invention in a dried state.
Fig.2 is a cross-sectional view showing the organic liquid absorbent material of the present invention in a state of having absorbed an organic liquid and hence in a swollen state.
Fig.3 is a cross-sectional view showing an organic liquid absorbent material of the present invention containing soil or a solid material, having a specific gravity not less than unity, with the organic liquid absorbent material being in a dried state.
Fig.4 is a cross-sectional view showing the organic liquid absorbent material of the present invention containing soil or a solid material, having a specific gravity not less than unity, with the organic liquid absorbent material being in a state of having absorbed an organic liquid and hence in a swollen state.
Fig.5 is a cross-sectional view showing an organic liquid absorbent material of the present invention in a dried state.
Fig.6 is a cross-sectional view showing the organic liquid absorbent material of the present invention in a state of having absorbed an organic liquid and hence in a swollen state.
Fig.7 shows the configuration of magnetically sucking and transporting the organic liquid absorbent material according to the present invention.
Fig.8 shows the configuration of magnetically sucking and transporting the organic liquid absorbent material according to the present invention.

### Best Mode for Carrying out the Invention

An organic liquid absorbent material of the present invention is generally prepared on introducing hydrophilic polar groups to a water-insoluble resin.

For preparation of a solvent absorbent resin which is inexpensive and which contains only a minor quantity of residual monomers, the present invention features using, as the feedstock, a water-insoluble resin obtained from an inexpensive general-purpose monomer. The water-insoluble resin used in the present invention may be a general-purpose resin, in particular a general-purpose resin contained in a waste material. Specified examples of the water-insoluble resin include an ABS (acrylonitrile- butadiene- styrene) polymer, high impact polystyrene (HIPS), a styrene- butadiene elastomer (SBC), SAN (styrene- acrylonitrile) polymer, a polyacrylonitrile polymer (PAN), polyacrylonitrile- butadiene (nitrile rubber), polystyrene (PS), nylon polymer, polyolefin (such as polyethylene, polypropylene or polyisoprene) polymer, vinyl chloride (PVC), polyphenylene ether (PPE), polyphenylene sulfide (PPS), polycarbonate (PC), polyethylene terephthalate (PET), polybutylene terephthalate (PBT), polysulfone, polyallyl sulfone, polyether sulfone, polythioether sulfone, polyether ketone, polyether imide, polyether ether ketone, polyamide (nylon), polyamideimide, polyimide, polyallylate, aromatic polyester, polyurethane, polyvinyl chloride, chlorinated polyether, polychloromethyl styrene, polyacrylate, polymethacrylate, celluloid, various liquid crystal polymers, methacryl resins (PMMA), amber resins, terpene resins, epoxy resins, phenol formalin resins, and melamine resins. Of these, the water-insoluble polymers having aromatic diene rings or conjugated diene structures, that allow for facilitated introduction of hydrophilic polar groups as later explained, in the main and/or side chains thereof, are most preferred. The content of the aromatic rings and/or conjugated diene units in the water-insoluble polymer is desirably about 1 to 100 mol% based on the weight of the total monomer units in the water-insoluble polymer. If the content is lower than this range, the number of the hydrophilic polar groups introduced into the water-insoluble resin is smaller, while the absorbency with respect to the polar solvent is lowered. Moreover, the water-insoluble resin tends to be dissolved in various solvents even after the hydrophilic polar groups have been introduced into the water-insoluble resin. In order to prevent this, the content is desirably not lower than about 1%.

Although there is no particular limitation to the molecular weight (Mw) of the water-insoluble resin material, it is customarily about 1,000 to 20,000,000 and preferably about 10,000 to 1,000,000 in terms of weight averaged molecular weight Mw). If the molecular weight is higher than 1,000, the liquid electrolyte solution is completely dissolved in water or in an organic solvent to render it impossible to evade the inconvenience that the solvent absorbent resin cannot be produced, that is, the state of the gel cannot be maintained following the absorption. The molecular weight lower than 20,000,000 is more practical in that hydrophilic groups can then be introduced more readily.

These water-insoluble resins may be newly prepared unused resin particles (virgin pellets). Alternatively, these resin materials may also be used resins or waste resins, molded for specified usage or application. The waste materials may be ejects (odds and ends) of the resin feedstock or molded products from the production process, chassis already used in electrical equipment or automobiles, various component materials, tubes, hoses or various shock-absorbing materials. The used resins mean those resins recovered from the above waste materials. The waste materials in the present invention may be those from plants, selling stores or household. The waste materials recovered from plants or selling stores, such as rejects or odds and ends, are more desirable than the waste materials recovered from the household, because the former waste materials are generally more uniform in composition.

The water-insoluble resin may be alloyed with other resins, or may be used or waste resins containing additives as known per se, such as face dyes, stabilizers, combustion retardants, plasticizers, fillers and other assistant agents. Alternatively, the water-insoluble resin may also be a mixture of the used or waste material with unused materials (virgin materials).

The present invention contemplates to introduce hydrophilic polar groups to the aforementioned water-insoluble resin for conversion to the solvent absorbent resin. The hydrophilic polar groups contribute to affording not only the effect in increasing the absorbency with respect to polar solvents but also the effect in preventing the water-insoluble resin from becoming dissolved in various solvents.

The hydrophilic polar groups may be enumerated by acidic or basic groups. The acidic or basic groups may also constitute a salt. As for specified examples of the hydrophilic polar groups, sulfo groups represented by the formula -SO₃M, and which may be in the form of a salt, where M is a hydrogen atom or a cation of metals, such as sodium or potassium, sulfuric acid groups represented by the formula -OSO₃M, and which may be in the form of a salt, where M has the same meaning as above, phospho groups, represented by the formula -PO(OM₁) (OM₂) or the formula -OPO(OM₁)(OM₂), and which may be in the form of a salt, where M₁ and M₂ may be the same or different and have the same meaning as M, and hydroxy groups represented by the formula -OM₃, and which may be in the form of a salt, where M3 has the same meaning as M, may be exemplified as acidic groups that may be in the form of salts. In addition, aminic bases, such as amino groups, secondary amino groups, such as methylamino groups, tertiary amino groups, such as dimethylamino groups, for example, quaternary ammonium groups, such as trimethyl ammonium chloride groups, that may be in the form of salts, may be exemplified as basic groups that may be in the form of a salt. Moreover, amide or nitro groups may also be used.

For introducing sulfo groups, which are or are not in the form of salts, to the water-insoluble resin, a water-insoluble resin, desirably containing an aromatic ring, is directly reacted with sulfonating agents, such concentrated sulfuric acid, preferably with a concentration not lower than about 70 wt%, sulfuric anhydride, fuming sulfuric acid or chlorosulfonic acid, or the resin is dissolved or dispersed in an organic solvent, to introduce sulfo groups to the resin. The resulting product then is neutralized with a basic compound, such as sodium hydroxide or potassium hydroxide, for conversion to a sulfonate. Meanwhile, the reaction temperature in introducing the sulfo groups is generally on the order of approximately 0°C to 200°C, preferably approximately 30°C to 120°C, although the temperature varies appreciably depending on whether or not an organic solvent is used. If the reaction temperature is approximately 0°C or higher, the rate of reaction is sufficiently high and a liquid electrolyte absorbing resin having more desirable properties may be produced. If the reaction temperature is not higher than approximately 200°C, molecular chains in the resin are not prone to disruption, while the resin is hardly soluble in water or in solvents. The reaction time is generally 1 minute to 40 hours, preferably five minutes to two hours, although the reaction time is varied appreciably with the reaction temperature. Under this condition, the reaction may proceed sufficiently with an optimum production efficiency.

For introducing sulfuric acid groups, that may be in the form of a salt, a water-insoluble resin, preferably having an unsaturated bond, is reacted with a hot aqueous solution of sulfuric acid, to introduce the sulfuric acid groups, and subsequently the resulting product is reacted with a basic compound, such as sodium hydroxide or potassium hydroxide, to form a sulfate.

For introducing carboxylic groups, that may be in the form of salts, n-butyl lithium is added to a water-insoluble resin, preferably containing aromatic groups, and the resulting product is reacted with dry ice, to introduce carboxylic groups. The resulting product then is reacted with a basic compound, for example, sodium hydroxide or potassium hydroxide, to form a carboxylate.

For introducing amide groups, a water-insoluble resin, containing nitro groups, may be hydrolyzed with heated concentrated sulfuric acid, or heated alkali, such as a heated aqueous solution of sodium hydroxide or of potassium hydroxide.

For introducing nitro groups, a water-insoluble resin preferably having an aromatic ring may be reacted with fuming nitric acid or a liquid mixture of nitric acid and sulfuric acid.

For introducing a -PO(OH)₂ group that may be in the form of a salt, phosphorus trichloride may be added to a water-insoluble resin desirably containing an aromatic ring, and the resulting product then is hydrolyzed to introduce the -PO(OH)₂ group. The resulting product then is reacted with a basic compound, such as sodium hydroxide or potassium hydroxide, to form a corresponding salt.

For introducing a -OPO(OH)₂ group, that may be in the form of a salt, phosphorus trichloride may be added to a water-insoluble resin desirably containing an unsaturated bond, and the resulting product then is hydrolyzed to introduce the -OPO(OH)₂ group. The resulting product then is reacted with a basic compound, such as sodium hydroxide or potassium hydroxide, to form a corresponding salt.

For introducing a hydroxy group that may be in the form of a salt, a water-insoluble resin desirably containing an unsaturated bond is reacted with an aqueous solution of sulfuric acid to enable hydroxy groups to be introduced. The resulting product then is reacted with a basic compound, such as sodium hydroxide or potassium hydroxide, to form a corresponding salt.

For introducing tertiary and/or quaternary aminic base, a water-insoluble resin desirably containing an aromatic ring is subjected to a Friedel-Kraft reaction for chloromethylation, followed by reaction with ammonia or a variety of amine compounds to introduce tertiary or quaternary amine salts as ionic groups. In introducing primary or secondary amino groups or converting these amino groups into corresponding salts, any known method may be used.

Meanwhile, hydrophilic polar group introducing agents or basic compounds may be virgin products, waste liquids discharged from plants, or recycled products. From the perspective of effective utilization of resources, it is more desirable to use the waste liquid as the feedstock of the liquid electrolyte absorbing resins.

Only one of these hydrophilic polar groups may be introduced, while a plurality of the hydrophilic polar groups may also be introduced in combination. The amount of the hydrophilic polar groups introduced to the water-insoluble resin is desirably about 0.1 to 99 mol% based on the weight of the units in the resin. This range is preferred in order to suppress dissolution in water of the resin following introduction of the hydrophilic polar groups, and in order to assure optimum absorbency into the liquid electrolyte.

The above-described method enables the hydrophilic polar groups to be introduced into the water-insoluble resin to produce a resin having superior solvent absorbency.

- By way of a more preferred embodiment, a reaction product, which is usually a gelated product, obtained by the reaction of introducing the hydrophilic polar groups, is preferably filtered, washed with water and subsequently dried or dehydrated to produce a resin having superior solvent absorbency.

The water-insoluble resin of the present invention may, of course, be prepared by polymerizing a monomer, to the main chain and/or the side chain of which the hydrophilic polar groups have been introduced, by means known per se.

Although the water-insoluble resin of the present invention has many usages, it may be useful as a processing agent for a waste solvent discharged from a plant, for example, as an emergency processing agent on occurrence of leakage of a solvent storage tank. The following are specified examples of solvents that can be absorbed with the water-insoluble resin obtained in accordance with the present invention:
·hydrocarbons:
   propane, butane, pentane, 2-methylbutane, hexane, 2-methylpentane, 2,2-dimethylbutane, 2,3- dimethylbutane, heptane, heptane isomers, octane, 2,2,3-trimethylpentane, isooctane, nonane, 2,2,5- trimethylhexane, decane, dodecane, unsaturated aliphatic hydrocarbons, benzene, toluene, xylene, o-xylene, m-xylene, p-xylene, ethylbenzene, cumene, mesitylene, naphthalene, tetralin, butylbenzene, p-cymene, cyclohexylbenzene, diethylbenzene, pentylbenzene, dipentylbenzene, dodecylbenzene, biphenyl, styrene, cyclopentane, methyl cyclopentane, cyclohexane, methyl cyclohexane, ethyl cyclohexane, p-menthane, bicyclohexyl, cyclohexene, α-pinene, dipentene, decalin, petroleum ether, petroleum benzine, petroleum naphtha, ligroin, industrial gasoline, kerosene, solvent naphtha, camphor oil, terepin oil and pine oil;
·halogenated hydrocarbons
   methyl chloride, dichloromethane, chloroform, carbon tetrachloride, ethyl chloride, 1,1- dichloroethane, 1,2- dichloroethane, 1,1,1- trichloroethane, 1,1,2-trichloroethane, 1,1,1,2- tetrachloroethane, 1,1,2,2- tetrachloroethane, pentachloroethane, hexachloroethane, 1,1- dichloroethane, 1,2- dichloroethane, trichloroethylene, tetrachloroethylene, propyl chloride, isopropyl chloride, 1,2-dichloropropane, 1,2,3- trichloropropane, allyl chloride, butyl chloride, sec-butyl chloride, isobutyl chloride, tert-butyl chloride, 1- chloropentane, chlorobenzene, o-dicyclobenzene, m- dicyclobenzene, p- dicyclobenzene,1,2,4- trichlorobenzene, o-chlorotoluene, p-chlorotoluene, 1-chloronaphthalene, chlorinated naphthalene, methyl bromide, bromoform, ethyl bromide, 1,2- dibromoethane, 1,1,2,2-tetrabromoethane, propyl bromide, iso propyl bromide, bromobenzene, o-dibromobenzene, 1-bromobenzene, fluorobenzene, benzotrifluoride, hexafluorobenzene, chlorobromomethane, trichlorofluoromethane, 1- bromo-2- chloroethane, 1,1,2-trichloro-1,2,2- trifluoroethane, 1,1,2,2- tetrachloro- 1,2- difluoroethane;
alcohols:
   methanol, ethanol, 1-propanol, 2-propanol, 1-butanol, 2-propanol, isobutyl alcohol, tent- butyl alcohol, 1- pentanol, 2- pentanol, 3- pentanol, 2- methyl-1-butanol, isopentyl alcohol, tert- pentyl alcohol, 3- methyl-2- butanol, neopentyl alcohol, 1- hexanol, 2-methyl-1- pentanol, 4-methyl-2- pentanol, 2-ethyl-1-butanol, 1- heptanol, 2- heptanol, 3- heptanol, 1- octanol, 2- octanol, 2-ethyl-1-hexanol, 1- nonanol, 3,5,5- trimethyl-1- hexanol, 1-decanol, 1- undecanol, 1-dodecanol, allyl alcohol, propargyl alcohol, benzyl alcohol, cyclohexanol, 1-methyl cyclohexanol, 2-methyl cyclohexanol, 3-methyl cyclohexanol, 4-methyl cyclohexanol, α-terepineol, abietinol, fusel oil, 1,2-ethanediol, 1,3-butanediol, 1,4-butanediol, 2,3-butanediol, 1,5- pentanediol, 2- butene-1,4- diol, 2-methyl-2,4- pentanediol, 2-ethyl-1,3- hexanediol, glycerol, 2-ethyl-2-(hydroxymethyl)- 1,3- propanediol, 1,2,6- hexanetriol;
phenols:
   phenol, cresol, o-cresol, m- cresol, p- cresol and xynols;
   ether, acetal diethylether, dipropylether, diisopropyl ether, bibutyl ether, dihexyl ether, ethylvinyl ether, butylvinyl ether, anisole, phenetole, butylphenyl ether, pentylphenyl ether, methoxy toluene, benzylethyl ether, diphenyl ether, dibenzyl ether, veratol, propylene oxide, 1,2-epoxybutane, dioxane, trioxane, furan, 2-methylfuran, tetrahydrofuran, tetrahydropyran, cienole, 1,2-dimethoxyetahne, 1,2-diethoxyetahne, 1,2-dibutoxyetahne, diethylene glycol dimethyl ether, diethylene glycol diethyl ether, diethylene glycol dibutyl ether, glecerine ether, crown ether, methlal, acetal;
·ketons:
   acetone, methylethylketone, 2- pentanone, 3- pentanone, 2- hexanone, methylisobutylketone, 2- heptanone, 4- heeptanone, diisobytylketone, acetonyl acetone, mesytil oxide, phorone, isophorone, cyclohexanone, methylcyclohexanone, acetophenone, camphor, cyclopentanone;
.alkylethers:
   dimethylether, diethylether, ethylmethylether, tetrahydroxyfuran (THF), dioxane
.fatty acids and acid anhydrides:
   formic acid, acetic acid, propionic acid, lactic acid, isolactic acid, pivalic acid, valeic acid, isovaleic acid, caproic acid, 2- ethylacetic acid, caprilic acid, 2- ethylhexanoic acid, oleic acid, acetic anhydride, propionic anhydride, lactic anhydride;
esters:
   methyl formate, ethyl formate, propyl formate, butyl formate, isobutyl formate, pentyl formate, methyl acetate, ethyl acetate, propyl acetate, iso propyl acetate, butyl acetate, isobutyl acetate, sec-butyl acetate, pentyl acetate, isopentyl acetate, sec-hexyl acetate, cyclohexyl acetate, benzyl acetate, 3- methoxybutyl acetate, 2- ethylbutyl acetate, 2- ethylhexyl acetate, methyl propionate, ethyl propionate, butyl propionate, isobutyl propionate, lactic acid esters, isolactic acid esters, isovaleic acid esters, stearic acid esters, benzoic acid esters, ethyl cinnamate, abietic acid esters, adipic acid bis(2- ethylhexyl), γ-butyrolactone, oxalic acid esters, diethyl malonate, maleic acid esters, dibutyl tartarate, tributyl citrate, sebacic acid esters, phthalic acid esters, ethylene glycol monoacetate, ethylene diacetate, ethylene glycol esters, diethylene glycol monoacetate, monoacetin, diacetin, triacetin, monobutyrin,diethyl caobonate, ethylene carbonate, propylene carbonate, boric acid esters, phosphoric acid esters;
.nitrogen compounds:
   nitromethane, nitroethane, 1-nitropropane, 2-nitropropane, nitrobenzene, acetonitrile, propionitrile, succinonitrole, butyronitrole, isobutyronitrole, valeronitrile, benzonitrile, α-tolunitrile, methylamine, dimethylamine, trimethylamine, ethylamine, diethylamine, triethylamine, propylamine, isopropylamine, dipropylamine, diisopropylamine, butylamine, isobutylamine, sec- butylamine, tert- butylamine, diobutylamine, diisoobutylamine, tributylamine, pentylamine, dipentylamine, tripentylamine, 2-ethylhexylamine, allylamine, aniline, N-methylaniline, N,N- dimethylainline, N,N-diethylaniline, o-toluidine, m-toluidine, p-toluidine, cyclohexylamine, dicyclohexylamine, parole, piperidine, puridine, α-picoline, β-picoline, γ-picoline, 2,4-lutidine, 2,6- lutidine, quinoline, isoquinoline, ethylene diamine, propylene diamine, diethylene triamine, tetraethylene pentamine, formaide, N- methyl formamide, N,N-dimethyl formamide, N,N- diethyl formamide, acetoamide, N- methylacetoamide, N,N- dimethylacetoamide, N- methylpropioamide, N,N,N',N'- tetramethylurea, 2-pyrrolidone, N- methyl pyrrolidone, ε-caprolactam, carbamic acid ester, urea, acrylamindeacrylamide;
·sulfur compounds:
   carbon disulfide, dimethyl sulfide, diethyl sulfide, thiophene, tetrahydrothiophene, dimethyl sulfoxide, sulforane, 1,3- propane sultone;
.compounds having two or more functional groups
   2- methoxyethanol, 2- ethoxyethanol, 2- (methoxymethoxy)ethanol, 2-isoproxyethanol, 2- butoxyethanol, 2- (isopentyloxy)ethanol, 2- (hexyloxy) ethsnol, 2- phenoxyethanol, 2- (benzyloxy)ethanol, furfuryl alcohol, tetrahydrofurfuryl alcohol, diethylene glycol, diethylene glycol monomethyl ether, diethylene glycol monoethyl ether, diethylene glycol monobutyl ether, triethylene glycol, triethylene glycol monomethyl ether, tetraethylene glycol, polyethylene glycol, 1- methoxy- 2-propanol, 1-ethoxy-2-propanol, dipropylene glycol, dipropylene glycol monomethyl ether, dipropylene glycol monoethyl ether, tripropylene glycol monomethyl ether, polypropylene glycol, poly(oxyethylene-oxypropylene) derivatives, diacetone alcohol, 2- chloroethanol, 1- chloro-2- propanol, 3-chloro-1,2- propanediol, 1,3-dichloro-2-propanol, 2,2,2-trifluoroethanol, 3-hydroxypropiononitrile, acetoncyanohydrin, 2- aninoethanol, 2-(dimethylamino) ethanol, 2-(diethylamino) ethanol, diethanolamine, N-butyl diethanolamine, triethanolamine, triisopropanolamine, isopropamolamine, 2,2'- thiodiethanolamine, furfural, bis(2-chloroethyl) ether, epichlorohydrin, o-nitroanisole, morphorine, N-ethylmorpholine, N-phenylmorpholine, lactic acid, lactic acid esters, methyl salicylate, 2-methoxyethyl acetate, 2- ethoxyethyl acetate, 2- butoxyethyl acetate, 2- phenoxyethyl acetate, diethyleneglycol monoethyl ether acetate, diethyleneglycol monobutyl ether acetate, acetomethyl acetate, acetoethyl acetate, cyanomethyl acetate, cyanoethyl acetate, chloroacetic acid, dichloroacetic acid, trichloroacetic acid, trifluoroacetic acid, o-chloroaniline, hexamethylphosphoric acid triamide, silicone oils, choline chloride;
·others:
   hexamethyl phosphoramide.

It is astonishing that the solvent absorbent resin of the present invention shows superior solvent absorption performance for such wide range of solvents. The reason is presumably that, since the solvent absorbent resin of the present invention has both an oleophilic site or an oleophilic site, which are based on the water-insoluble resin, and a hydrophilic site and a polar site, which are based on the hydrophilic polar group, in a molecule, and hence is able to absorb or adsorb liquid or gaseous chemical substances, such as a wider range of various solvents.

These organic solvents may be in gaseous, liquid or solid state at ambient temperature without any particular problems. If the organic solvent is in the form of a liquid, the solvent absorbent resin may directly be added to an organic sovent to absorb the solvent. If the organic solvent is in the form of a gas, it may be absorbed in a liquefied state or by contacting the resin with the gaseous organic solvent. If the organic solvent is in the form of a solid, it may be absorbed by the resin as the solvent is dissolved or melted in other organic solvent(s).

As discussed above, a resin having a superior absorption performance for organic solvents may be produced by introducing hydrophilic polar groups into a water-insoluble resin, without regard to the introducing methods used.

If desired, the solvent absorbent resin of the present invention may further contain other components, such as known liquid absorbing resins, for example, those obtained on addition of a cross-linkable monomer followed by polymerization, stabilizers or humidifiers.

As solvent absorbent resins according to the present invention, samples of Examples 1 to 5 were actually prepared and evaluated. However, the present invention is not limited to these specified Examples.

### Example 1

A commercially available SAN resin (styrene, 57 mol%; acrylonitrile, 43 mol %) was crushed to 16 to 32 meshes and reacted with 90 wt% of 100°C sulfuric acid for thirty minutes. After the end of the reaction, the gelated mass in the system was filtered through a glass filter, washed with water and again filtered. The resulting product was dried in an air circulating type drier at 105°C for two hours. From the results of elementary analysis of sulfur of the resulting dried product, sulfo groups were found to account for 26 mol% in the entire monomer units. From the measured results of FT-IR, it was also found that the nitrile groups in the resin were converted into amide groups.

### Example 2

A commercially available ABS resin (styrene, 50 mol%; acrylonitrile, 39 mol%; butadiene, 11 mol%) was crushed to 16 to 32 meshes and under the same conditions as in Example 1. From the results of elementary analysis of sulfur of the resulting dried product, sulfo groups were found to account for 42 mol% in the entire monomer units. From the measured results of FT-IR, it was also found that the nitrile groups in the resin were converted into amide groups.

### Example 3

A transparent portion of a used 8 mm video cassette (SAN resin composed of 64 mol% of styrene and 36 mol% of styrene), crushed to 16 to 32 mesh, was reacted under the same conditions as in Example 1. From the results of elementary analysis of sulfur, sulfo groups were found to account for 31 mol% in the entire monomer units. From the measured results of FT-IR, it was also found that the nitrile groups in the resin were converted into amide groups.

### Example 4

A black-colored portion of a used 8 mm video cassette (ABS resin composed of 52 mol% of styrene, 28 mol% of acrylonitrile and 19 mol% of butadiene), crushed to a size of 16 to 32 mesh, was reacted with waste sulfuric acid, recovered from a semiconductor plant (88 wt%; used in rinsing semiconductor products) at 100°C for three hours. After the end of the reaction, the gelated mass in the system was filtered through a glass filter, neutralized with a waste sodium hydroxide solution, recovered from a semiconductor plant (after use for regenerating an ion exchange resin), washed with water and filtered. The resulting product was dried in an air circulating type drier at 105°C for two hours. From the results of elementary analysis of sulfur, sulfo groups (in the form of sodium salt) were found to account for 45 mol% in the entire monomer units. From the measured results of FT-IR, it was also found that the nitrile groups in the resin were converted into amide groups.

### Example 5

A used rubber hose (acrylonitrile, 22 wt%; butadiene, 78 wt%) was frozen and crushed to a size of 16 to 32 mesh and reacted with 96 wt% of concentrated sulfuric acid at 90°C for thirty minutes. After the end of the reaction, the gelated product in the system was filtered through a glass filter, washed with water and again filtered. The resulting filtered product was dried in an air circulating type drier at 105°C for two hours. From the results of elementary analysis of sulfur, sulfo groups were found to account for 19 mol% in the entire monomer units. From the measured results of FT-IR, it was also found that the nitrile groups in the resin were converted into amide groups.

The solvent absorbency of the product obtained by the above processing was compared to that of the commercially available water-absorbent resin (sodium polyacrylate type high absorbent resin).

The respective samples, unified to a particle size of 200 to 65 mesh, were immersed for thirty minutes in a large quantity of each of various solvents, and sample weights after the immersion were measured, to compare the absorbency form the equation: factor of absorption = sample weight after immersion (g)/sample weight before immersion (g). The results are shown in the following table 1:

**Table 1**

| | Factor of absorption (g/g) | | | | | |
|---|---|---|---|---|---|---|
| | Ex.1 | Ex.2 | Ex.3 | Ex.4 | Ex.5 | commercially available water-absorbent resin |
| methanol | 220 | 122 | 165 | 98 | 36 | 1.2 |
| ethanol | 20 | 5 | 18 | 15 | 8 | 1.0 |
| IPA | 17 | 13 | 15 | 13 | 5 | 1.4 |
| acetone | 40 | 10 | 10 | 12 | 5 | 1.9 |
| THF | 16 | 35 | 16 | 8 | 7 | 2.8 |
| DMF | 88 | 83 | 18 | 20 | 10 | 1.2 |
| DMSO | 354 | 140 | 210 | 97 | 35 | 1.6 |
| toluene | 20 | 11 | 15 | 10 | 4 | 2.7 |
| n-heptane | 10 | 8 | 8 | 9 | 3 | 1.2 |

In the above table, IPA, THF, DMF and CMSO denote isopropyl alcohol, tetrahydrofuran, dimethylformamide and dimethyl sulfoxide, respectively.

The above results indicate that the resin obtained by the present invention is superior in solvent absorbency.

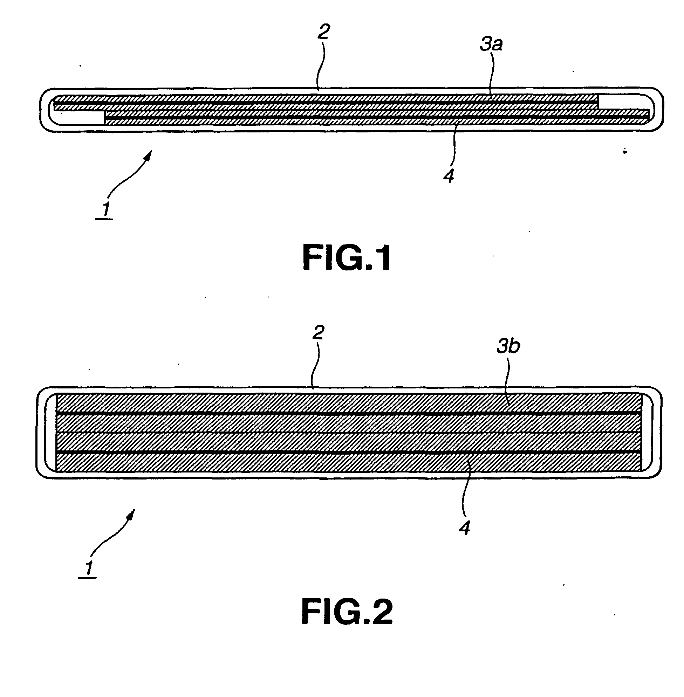

Referring to the drawings, preferred embodiments of the present invention are explained in detail. In the following, an organic liquid absorbent unit 1, shown in Figs.1 and 2, is explained as an organic liquid absorbent unit embodying the present invention. An 'organic liquid absorbent unit' in the claims and in the following description of the embodiments may be exemplified by one having the function of a so-called sand bag used for preventing leakage of an organic liquid from a storage area or to outside the plant (sand bag substitute) and by one having the function of removing an unneeded organic liquid left over after leakage of the organic liquid.

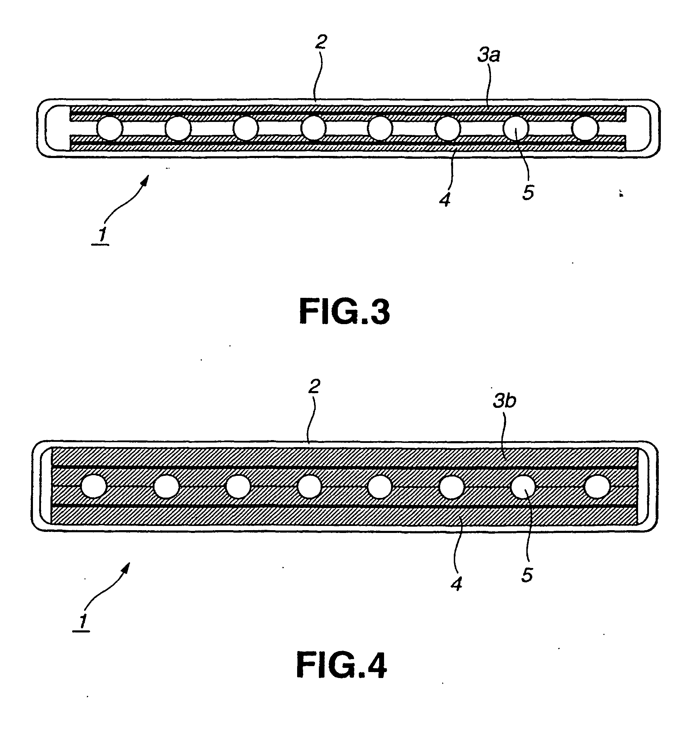

The organic liquid absorbent unit 1 according to the present invention is made up of the organic liquid transmitting pouch 2, and the organic liquid absorbent resin 3 and the support 4, both enclosed in this organic liquid transmitting pouch 2. In a dried state, the organic liquid absorbent unit 1 is made up by an organic liquid absorbent resin 3a, in a dried state, the support 4 and the organic liquid transmitting pouch 2, as shown in the cross-sectional view of Fig.1. In a liquid-soaked swollen state, the organic liquid absorbent unit 1 is made up of an organic liquid absorbent resin 3b in a swollen state in which it has absorbed the liquid, the support 4 and the organic liquid transmitting pouch 2, as shown in the cross-sectional view of Fig.2. The dried state and the swollen state brought about by liquid absorption of the organic liquid absorbent unit 1 of the present invention, containing soil or a solid material 5 having a specific gravity not less than unity, are shown in the cross-sectional views of Figs.3 and 4, respectively.

The organic liquid absorbent resin, used in the present invention, is usually produced by introducing hydrophilic polar groups into a water-insoluble resin. Although there is no limitation to the water-insoluble resin used as the feedstock, it is preferred to use a water-insoluble resin obtained from an inexpensive general-purpose monomer as the feedstock. Specifically, the following resins may be used as the general-purpose water-insoluble resin:
These water-insoluble polymers may be newly prepared unused resin particles (virgin pellets). Alternatively, these resin materials may also be used resins or waste resins, molded for specified usage or application. The waste materials may be ejects (odds and ends) of the resin feedstock or molded products from the production process, chassis already used in electrical equipment or automobiles, various component materials, tubes, hoses or various shock-absorbing materials. The used resins mean those resins recovered from the above waste materials. The waste materials in the present invention may be those from plants, selling stores or household. The waste materials recovered from plants or selling stores, such as rejects or odds and ends, are preferred to the waste materials recovered from the household, because the former waste materials are generally more uniform in composition.

If desired, the organic liquid absorbent resin of the present invention may be mixed with other components, such as known organic liquid absorbent resin, such as one obtained on addition of a cross-linkable monomer followed by polymerization, stabilizers or humidifiers.

By introducing hydrophilic polar groups into the water-insoluble resin by any suitable method, but preferably by the above-described method, it is possible to produce a resin having superior organic liquid absorbency.

Specifically, the organic liquids, that can be absorbed with the organic liquid absorbent resin obtained in accordance with the present invention, may be exemplified by those now explained.

It is astonishing that the solvent absorbent resin of the present invention exhibits superior solvent absorption performance for such wide range of solvents. The reason is presumably that, since the organic liquid absorbent resin of the present invention has both an oleophilic site or a polar site, which are based on the water-insoluble resin, and a hydrophilic site or a non-polar site, which are based on the hydrophilic polar group, in a molecule, and hence is able to absorb or adsorb liquid or gaseous chemical substances, such as a wider range of various solvents.

These organic solvents may be in gaseous, liquid or solid state at ambient temperature without any particular problems. If the organic solvent is in the form of a liquid, the organic liquid absorbent unit of the present invention containing the organic liquid absorbent resin may directly be contacted with an organic liquid to absorb the organic liquid. If the organic solvent is in the form of a gas, it may be liquefied and absorbed in this state or the organic liquid absorbent unit of the present invention containing the organic liquid absorbent resin may be contacted with the gaseous organic liquid for absorption. If the organic solvent is in the form of a solid, it may be dissolved or melted in other organic liquids and absorbed in this state in the organic liquid absorbent unit of the present invention containing the organic liquid absorbent resin.

The organic liquid transmitting pouch 2 of the present invention may be formed by a cloth of natural or synthetic fibers. The natural fibers may be enumerated by, for example, cotton, hemp or silk. The synthetic fibers may be enumerated by, for example, polyamide, polyimide, polyester, polyethylene or polypropylene. These fibers may be used singly or mixed and formed into a woven or knitted cloth. The pouch may also be a non-woven cloth. It may, however, formed by a film-like product having fine through-holes passing through to the upper and lower surfaces of the product.

As for the material of the support 4 of the present invention, there is no particular limitation, provided that it is able to support the organic liquid absorbent resin. The term 'support' herein means e.g., causing the modified polymer compounds to be deposited or impregnated in order to prevent the modified polymer compound from becoming e.g., drastically tilted in the organic liquid transmitting pouch 2.

The support is preferably a flexible netted product. Such flexible netted product 4 may be a cloth of natural or synthetic fibers. The support may be formed of the same material as that used for the organic liquid transmitting pouch 2. The natural fibers may, for example, be exemplified by cotton, hemp or silk. The synthetic fibers may be enumerated by, for example, polyamide, polyimide, polyester, polyethylene or polypropylene. These fibers may be used singly or mixed and formed into a woven or knitted cloth. The pouch may also be a non-woven cloth or paper. It may, however, formed by a film-like product having fine through-holes passing through to the upper and lower surfaces of the product.

In this case, the support 4, preferably the flexible netted product, preferably has a through-hole ratio higher than the organic liquid transmitting pouch 2, whereby the organic liquid absorbent resin can be deposited on or impregnated in the support to secure the organic liquid absorbent resin to the support. It is possible in this manner to prevent the organic liquid absorbent unit from becoming collapsed due to the organic liquid absorbent resin becoming offset within the organic liquid absorbent unit during transport or storage of the organic liquid absorbent unit. Moreover, even if the organic liquid absorbent unit is repeatedly used, specifically, used for liquid absorption and subsequently dried for re-use, the organic liquid absorbent resin may be prevented from becoming collapsed in the organic liquid absorbent unit to increase the number of times of repeated use.

Among the methods for securing the organic liquid absorbent resin to the support of the present invention by deposition or impregnation, there is such a method consisting in coating a water dispersion system of the organic liquid absorbent resin in the swollen state of having absorbed the liquid on the support and drying the water dispersion system in situ. There is also such a method consisting in coating an organic liquid dispersion system of the organic liquid absorbent resin in the non-swollen state on the support and drying the water dispersion system in situ. This meritoriously simplifies the coating and drying process to diminish the energy consumption. There may also be such a method consisting in impregnating the support with water or an organic liquid and allowing the organic liquid absorbent resin in the dried state to be deposited on the support to dry the entire system in situ.

The sheet-like material, secured to the support by depositing the organic liquid absorbent resin to the support, or impregnating the support with the organic liquid absorbent resin, may be compacted by a static press orb roll. Although this operation may be performed at room temperature, it may preferably be performed under heating to a temperature higher than the room temperature.

According to the present invention, the soil and/or a solid material with a specific gravity not lower than unity may also be contained in the organic liquid transmitting pouch in addition to the organic liquid absorbent resin. By so doing, there is derived an advantage that the organic liquid absorbent unit of the present invention is not liable to be flooded by an organic liquid especially at a time when not much time has elapsed since it is first installed.

The solid material with the specific gravity not lower than unity may be exemplified by natural ores, waste materiels, or a waste material bonded together. The constituent materials may be enumerated by plastics, metals, ceramics, glass, or mixtures thereof. For bonding, polymer materials having a specific gravity not larger than unity may be used. Although there is no limitation to the polymer materials used for bonding, these may be exemplified by polystyrene, styrene-propylene copolymers, styrene-butadiene copolymers, styrene-vinyl chloride copolymers, styrene- vinyl acetate copolymers, styrene-acrylate copolymers, styrene -methacrylate copolymers, polyester resins, water-soluble resins, such as polyvinyl alcohol, casein or sodium polyacrylate, alcohol-soluble resins, such as copolymerized nylon or methoxymethylated nylon, and cured resins forming a three-dimensional meshed structure, such as polyurethane, melamine resins or epoxy resins.

According to the present invention, a magnetic material may be used as a solid material having a specific gravity not lower than unity. This is meritorious in that the organic liquid absorbent unit according to the present invention may be magnetically attracted to enable movement and transport by e.g., a crane. There is an additional asset that the organic liquid absorbent unit can be discriminated by this magnetism.

Such magnetic material may be exemplified by such material as exhibits ferrimagnetism, ferromagnetism or parasitic magnetism. Specified examples of the ferromagnetic materials include iron, nickel, cobalt, alloys thereof, alloys containing these metals, transition metals or alloys thereof, and alloys containing rare earth elements. Specified examples of the ferrimagnetic materials include magnetite, maghemite, hematite, manganese zinc ferrite, manganese nickel ferrite, barium ferrite and strontium ferrite. These may consist of natural ores, waste materials or waste materials bonded together. These materials are higher in specific gravity than the routine inorganic materials and hence are able to elevate the weight of the sand bags significantly. If the sand bag employing these materials is in a state of having absorbed the liquid, its weight can be increased correspondingly. Moreover, these materials can be acquired from inductors or loudspeakers of used electrical equipment or deflection yokes of used television receivers. The present invention is beneficial from the standpoint of effective utilization of resources in consideration that these are components difficult to dispose of in the disintegration processing of electronic equipment.

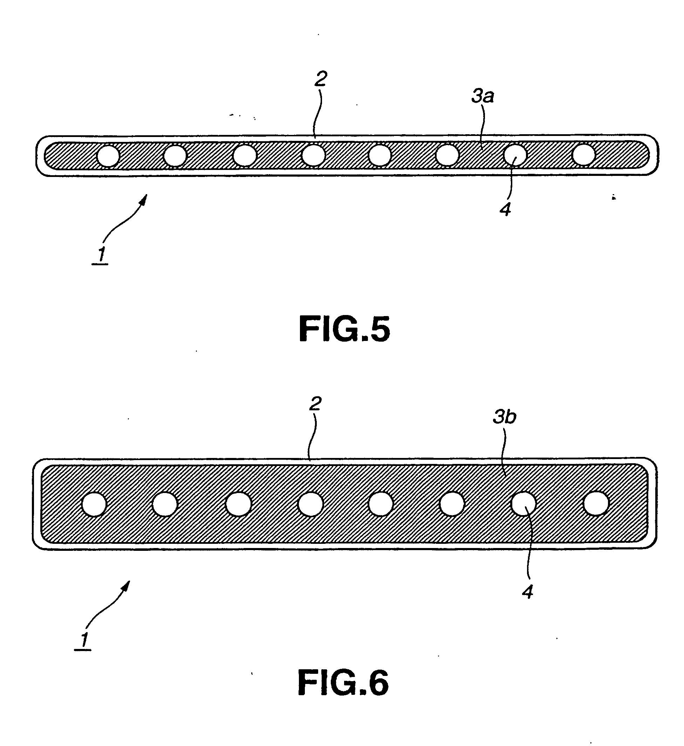

Referring to the drawings, further preferred embodiments of the present invention are explained in detail. In the following, the organic liquid absorbent unit 1 shown in Figs.5 and 6 is explained as an organic liquid absorbent unit embodying the present invention. An 'organic liquid absorbent unit' in the claims and in the description of the embodiments may be exemplified by one having the function of a so-called sand bag used for preventing leakage of an organic liquid from a storage area or to outside a plant (sand bag substitute) and by one having the function of removing an unneeded organic liquid left over after leakage of the organic liquid.

The organic liquid absorbent unit 1 according to the present invention is made up of the organic liquid transmitting pouch 2, and the organic liquid absorbent resin 3 enclosed in this organic liquid transmitting pouch 2. In a dried state, the organic liquid absorbent unit 1 is made up by an organic liquid absorbent resin 3a, in a dried state, and the organic liquid transmitting pouch 2, as shown in the cross-sectional view of Fig.5. In a liquid-soaked swollen state, the organic liquid absorbent unit 1 is made up of an organic liquid absorbent resin 13b in a swollen state in which it has absorbed the liquid, and an organic liquid transmitting pouch 12, as shown in the cross-sectional view of Fig.6. In these figures, the reference numeral 7 denotes a soil or other solid substances with the specific gravity not lower than unity.

The organic liquid absorbent resin, used in the present invention, is normally produced by introducing hydrophilic polar groups to the water-insoluble resin. Although there is no particular limitation to the water-insoluble resin, used as feedstock, it is desirable to use a water-insoluble resin obtained from inexpensive general-purpose monomer. These general-purpose water-insoluble resins may be those given above (omitted here).

It is a significant effect of the present invention that the organic liquid absorbent resin exhibits superior organic liquid absorption performance for such wide range of solvents. The reason is presumably that, since the organic liquid absorbent resin of the present invention has both an oleophilic site or a polar site, which is based on the water-insoluble resin, and a hydrophilic site or a non-polar site, which is based on the hydrophilic polar group, in a molecule, and hence is able to absorb or adsorb liquid or gaseous chemical substances, such as a wider range of various solvents.

These organic solvents may be in gaseous, liquid or solid state at ambient temperature without any particular problems. If the organic solvent is in the form of a liquid, the organic liquid absorbent unit of the present invention containing the organic liquid absorbent resin may directly be contacted with an organic liquid to absorb the organic liquid. If the organic solvent is in the form of a gas, it may be liquefied and absorbed in this state, or the organic liquid absorbent unit of the present invention containing the organic liquid absorbent resin may be contacted with the gaseous organic liquid for absorption. If the organic solvent is in the form of a solid, it may be dissolved or melted in other organic liquids and absorbed in this state in the organic liquid absorbent unit of the present invention containing the organic liquid absorbent resin.

The organic liquid transmitting pouch 2 of the present invention may be formed by a cloth of natural or synthetic fibers. The natural fibers may be enumerated by, for example, cotton, hemp or silk. The synthetic fibers may be enumerated by, for example, polyamide, polyimide, polyester, polyethylene or polypropylene. These fibers may be used singly or mixed and formed into a woven or knitted cloth. The pouch may also be formed by a non-woven cloth. It may, however, be formed by a film-like product having fine through-holes passing through to the upper and lower surfaces of the product.

According to the present invention, the soil and/or a solid material with a specific gravity not lower than unity may also be contained in the organic liquid transmitting pouch in addition to the organic liquid absorbent resin. By so doing, there is derived an advantage that the organic liquid absorbent unit of the present invention is not liable to be flooded by an organic liquid especially at a time when not much time has elapsed since it is first installed.

The solid material with the specific gravity not lower than unity may be exemplified by natural ores, waste materiels, or a waste material bonded together. The constituent materials may be enumerated by plastics, metals, ceramics, glass or mixtures thereof. For bonding, polymer materials having a specific gravity not larger than unity may be used. Although there is no limitation to the polymer materials used for bonding, these may be exemplified by polystyrene, styrene-propylene copolymers, styrene-butadiene copolymers, styrene-vinyl chloride copolymers, styrene-vinyl acetate copolymers, styrene-acrylate copolymers, styrene-methacrylate copolymers, polyester resins, water-soluble resins, such as polyvinyl alcohol, casein or sodium polyacrylate, alcohol-soluble resins, such as copolymerized nylon or methoxymethylated nylon, and cured resins forming a three-dimensional meshed structure, such as polyurethane, melamine resins or epoxy resins.

According to the present invention, a magnetic material may be used as a solid material having a specific gravity not lower than unity. This is meritorious in that the organic liquid absorbent unit according to the present invention may be magnetically attracted to enable movement and transport by e.g., a crane. There is an additional asset that the organic liquid absorbent unit can be discriminated by this magnetism.

Such magnetic material may be exemplified by such material as exhibits ferrimagnetism, ferromagnetism or parasitic magnetism. Specified examples of the ferromagnetic materials include iron, nickel, cobalt, alloys thereof, alloys containing these metals, transition metals or alloys thereof, and alloys containing rare earth elements. Specified examples of the ferrimagnetic materials include magnetite, maghemite, hematite, manganese zinc ferrite, manganese nickel ferrite, barium ferrite and strontium ferrite. These may consist of natural ores, waste materials or waste materials bonded together. These materials are higher in specific gravity than the routine inorganic materials and hence are able to elevate the weight of the sand bags significantly. If the sand bag employing these materials is in a state of having absorbed the liquid, its weight can be increased correspondingly. Moreover, these materials can be acquired from inductors or loudspeakers of used electrical equipment or deflection yokes of used television receivers. The teaching of the present invention is beneficial from the standpoint of effective utilization of resources in consideration that the above components are difficult to dispose of in the disintegration processing of electronic equipment.

The organic liquid absorbent unit according to the present invention is used for prohibiting an organic liquid stored in a tank from leaking from the site of storage or to outside a plant in case liquid leakage has occurred in the tank on outbreak of a disaster such as earthquake. The organic liquid absorbent unit may also be used for disposing of the waste organic liquid discharged e.g., from a plant.

Referring to the drawings, a further preferred embodiment of the present invention is explained in detail. In the following, the organic liquid absorbent unit 1 shown in Figs.3 to 8 is explained as an organic liquid absorbent unit embodying the present invention. As explained previously, an 'organic liquid absorbent unit' may be exemplified by one having the function of a so-called sand bag used for preventing leakage of an organic liquid from a storage area or to outside a plant (sand bag substitute) and by one having the function of removing an unneeded organic liquid left over after leakage of the organic liquid.

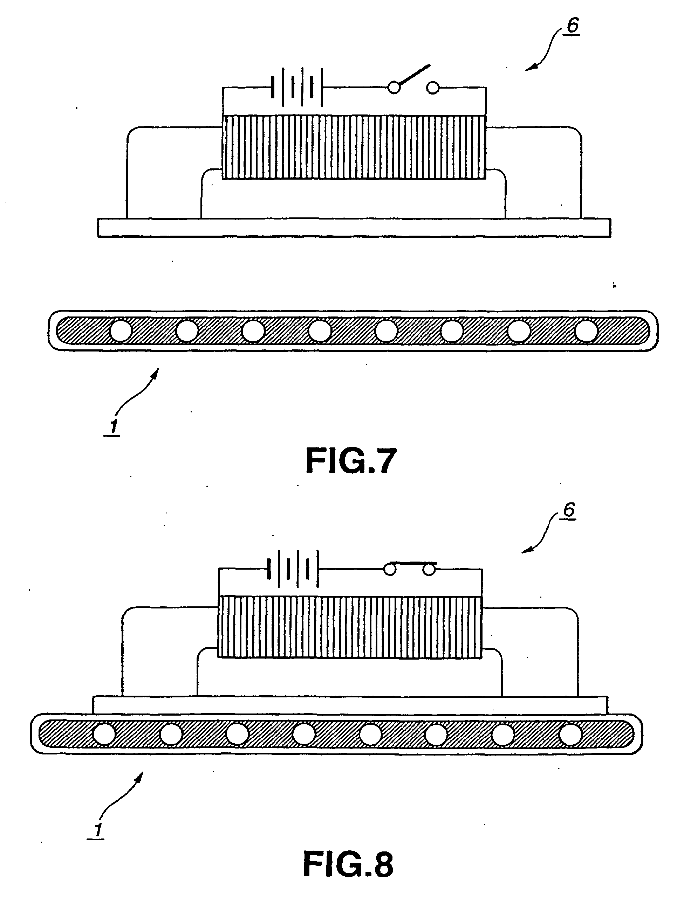

The organic liquid absorbent unit 1 according to the present invention is made up of an organic liquid transmitting pouch 2, and an organic liquid absorbent resin 3 enclosed along with a magnetic member 7a in this organic liquid transmitting pouch 2. In a dried state, the organic liquid absorbent unit 1 is made up by the organic liquid transmitting pouch 2, organic liquid absorbent resin 3a, and the magnetic member 7a, as shown in the cross-sectional view of Fig.5. In a swollen state, brought about by liquid absorption, the organic liquid absorbent unit 1 is made up by the organic liquid absorbent resin 3b in a swollen state in which it has absorbed the liquid, magnetic member and the organic liquid transmitting pouch 2, as shown in the cross-sectional view of Fig.6. The dry state and the liquid soaked and swollen state of the organic liquid absorbent unit 21, according to the present invention, in which is enclosed the soil or the solid substance 7a with a specific gravity not lower than unity, are shown in Figs.7 and 4, respectively.

The organic liquid absorbent resin, used in the present invention, is normally produced by introducing hydrophilic polar groups to the water-insoluble resin. Although there is no particular limitation to the water-insoluble resin used as feedstock, it is desirable to use a water-insoluble resin obtained from inexpensive general-purpose monomers. These general-purpose water-insoluble resins may be those given above (omitted here).

The organic liquids that may be absorbed with the organic liquid absorbent resin, obtained by the present invention, are the same as those shown above.

It is a significant effect of the present invention that the solvent absorbent resin. exhibits superior solvent absorption performance for such wide range of solvents. The reason is presumably that, since the organic liquid absorbent resin of the present invention has both an oleophilic site or a polar site, which is based on the water-insoluble resin, and a hydrophilic site or a non-polar site, which is based on the hydrophilic polar group, in a molecule, and hence is able to absorb or adsorb liquid or gaseous chemical substances, such as a wider range of various solvents.

These organic solvents may be in gaseous, liquid or solid state at ambient temperature without any particular problems. If the organic solvent is in the form of a liquid, the organic liquid absorbent unit of the present invention containing the organic liquid absorbent resin may directly be contacted with an organic liquid to absorb the organic liquid. If the organic solvent is in the form of a gas, it may be liquefied and absorbed in this state, or the organic liquid absorbent unit of the present invention containing the organic liquid absorbent resin may be contacted with the gaseous organic liquid for absorption. If the organic solvent is in the form of a solid, it may be dissolved or melted in other organic liquids and absorbed in this state in the organic liquid absorbent unit of the present invention containing the organic liquid absorbent resin.

The present invention features containing the attractable substance 7a, in addition to the organic liquid absorbent resin 3, in the organic liquid permeating pouch. As the attractable substance 7a, it is desirable to use a magnetic substance. By having the magnetic material contained in the pouch, the organic liquid absorbent unit 1 may be magnetically attracted, using magnetic suction means 6, as shown in Figs.7 and 8, to enable movement and transport by e.g., a conveyor or a crane. This is meritorious in enabling transport to places hazardous for human operators or prompt transport in case of an emergency. There is an additional asset that the organic liquid absorbent unit can be discriminated by this magnetism.

Such magnetic material may be exemplified by material exhibiting ferrimagnetism, ferromagnetism or parasitic magnetism. Specified examples of the ferromagnetic materials include iron, nickel, cobalt, alloys thereof, alloys containing these metals, transition metals or alloys thereof, and alloys containing rare earth elements. Specified examples of the ferrimagnetic materials include magnetite, maghemite, hematite, manganese zinc ferrite, manganese nickel ferrite, barium ferrite and strontium ferrite. These may consist of natural ores, waste materials or waste materials bonded together. These materials can be acquired from inductors or loudspeakers of used electrical equipment or deflection yokes of used television receivers. The teaching of the present invention is beneficial from the standpoint of effective utilization of resources in consideration that the above components are difficult to dispose of in the disintegration processing of electronic equipment. The technique of producing ferrite with used dry cells, which has now been developed, may be effectively adapted to the present invention. These magnetic materials are higher in specific gravity than the routine inorganic materials and contributes to increasing the weight of the organic liquid absorbent unit. The magnetic materials are also effective in increasing the weight of even the organic liquid absorbent unit in the liquid-soaked state.

The organic liquid transmitting pouch 2 of the present invention may be formed by a cloth of natural or synthetic fibers. The natural fibers may be enumerated by, for example, cotton, hemp or silk. The synthetic fibers may be enumerated by, for example, polyamide, polyimide, polyester, polyethylene or polypropylene. These fibers may be used singly or mixed and formed into a woven or knitted cloth. The pouch may also be formed by a non-woven cloth. It may, however, be formed by a film-like product having fine through-holes passing through to the upper and lower surfaces of the product.

According to the present invention, a support may further be contained in the organic liquid permeating pouch 2, in addition to the organic liquid absorbent resin and the magnetic substance.

There is no limitation to the shape or the component material of a support 5 according to the present invention provided that the support is capable of supporting the organic liquid absorbent resin. The support is preferably a flexible netted product. Such flexible netted product 5 may be a cloth of natural or synthetic fibers. The support may be formed of the same material as that used for the organic liquid transmitting pouch 2. The natural fibers may, for example, be exemplified by cotton, hemp or silk. The synthetic fibers may be enumerated by, for example, polyamide, polyimide, polyester, polyethylene or polypropylene. These fibers may be used singly or mixed, and may be formed into a woven or knitted cloth. The pouch may also be a non-woven cloth or paper. It may, however, formed by a film-like product having fine through-holes passing through to the upper and lower surfaces of the product.

In this case, the support 5, preferably the flexible netted product, preferably has a through-hole ratio higher than the organic liquid transmitting pouch 2, whereby the organic liquid absorbent resin can be deposited on or impregnated in the support to secure the organic liquid absorbent resin to the support. It is possible in this manner to prevent the organic liquid absorbent unit from becoming collapsed due to the organic liquid absorbent resin becoming offset within the organic liquid absorbent unit during transport or storage of the organic liquid absorbent unit. Moreover, even if the organic liquid absorbent unit is repeatedly used, specifically, used for liquid absorption and subsequently dried for re-use, the organic liquid absorbent resin may be prevented from becoming collapsed in the organic liquid absorbent unit, thereby allowing to increase the number of times of repeated use.

Among the methods for securing the organic liquid absorbent resin to the support of the present invention by deposition or impregnation, there is such a method consisting in coating a water dispersion system of the organic liquid absorbent resin in the liquid-soaked swollen state on the support and drying the water dispersion system in situ. There is also such a method consisting in coating an organic liquid dispersion system of the organicliquid absorbent resin in the non-swollen state on the support and drying the water dispersion system in situ. This meritoriously simplifies the coating and drying process to diminish the energy consumption. There may also be such a method consisting in impregnating the support with water or an organic liquid and allowing the organic liquid absorbent resin in the dried state to be deposited on the support to dry the entire system in situ.

The sheet-like material, secured to the support by depositing the organic liquid absorbent resin to the support, or impregnating the support with the organic liquid absorbent resin, may be compacted by a static press or roll. Although this operation may be performed at room temperature, it may preferably be performed under heating to a temperature higher than the room temperature.

According to the present invention, the soil or the solid substance with a specific gravity not less than unity may be contained in the organic liquid transmitting pouch in addition to the organic liquid absorbent resin. By so doing, there is derived an advantage that the organic liquid absorbent unit of the present invention is not liable to be flooded by an organic liquid especially at a time when not much time has elapsed since it is first installed.

The solid material with the specific gravity not lower than unity may be exemplified by natural ores, waste materiels, or a waste material bonded together. The constituent materials may be enumerated by plastics, glass, metals, ceramics, or mixtures thereof. For bonding, polymer materials having a specific gravity not larger than unity may be used. Although there is no limitation to the polymer materials used for bonding, these may be exemplified by polystyrene, styrene-propylene copolymers, styrene-butadiene copolymers, styrene-vinyl chloride copolymers, styrene- vinyl acetate copolymers, styrene-acrylate copolymers, styrene-methacrylate copolymers, polyester resins, water-soluble resins, such as polyvinyl alcohol, casein or sodium polyacrylate, alcohol-soluble resins, such as copolymerized nylon or methoxymethylated nylon, and cured resins forming a three-dimensional meshed structure, such as polyurethane, melamine resins or epoxy resins.

The present invention also features sucking an organic liquid absorbent unit, comprised of an organic liquid permeating pouch enclosing therein an organic liquid absorbent resin and an attracted substance. Specifically, a magnetic material is used as an attractable substance 4, and the organic liquid absorbent unit 1 is magnetically transported, using magnetic attracting means 6, as shown for example in Figs.7 and 8.

By attraction for transport by exploiting the attractable material, movement and transport in large quantities at a time become possible with the use of a conveyor or a crane. This is meritorious in enabling transport to places hazardous for human operators or prompt transport in case of an emergency. There is an additional asset that the organic liquid absorbent unit can be discriminated by this magnetism.

Referring to the drawings, the organic liquid absorbent unit suited to the transporting method of the present invention is now explained in detail. In the following, the organic liquid absorbent unit 1 shown in Figs.3 to 6 is explained as an organic liquid absorbent unit of the present invention. The 'organic liquid absorbent unit' in the claims and in the of description of the embodiments may be exemplified by one having the function of a so-called sand bag used for preventing leakage of an organic liquid from a storage area or to outside the plant (sand bag substitute) and by one having the function of removing an unneeded organic liquid left over after leakage of the organic liquid.

The organic liquid absorbent unit 1 according to the present invention is made up of an organic liquid transmitting pouch 2, and an organic liquid absorbent resin 3 enclosed along with a magnetic member 7a in this organic liquid transmitting pouch 2. In a dried state, the organic liquid absorbent unit 1 is made up by the organic liquid transmitting pouch 2, organic liquid absorbent resin 3a, and the magnetic member 7a, as shown in the cross-sectional view of Fig.5. In a swollen state, brought about by liquid absorption, the organic liquid absorbent unit 1 is made up by the organic liquid absorbent resin 3b in a swollen state in which it has absorbed the liquid, magnetic member and the organic liquid transmitting pouch 2, as shown in the cross-sectional view of Fig.2. The dry state and the liquid-soaked and swollen state of the organic liquid absorbent unit 1, according to the present invention, in which is enclosed the soil or the solid substance with a specific gravity not lower than unity, are shown in Figs.3 and 4, respectively.

The organic liquid absorbent resin, used in the present invention, is normally produced by introducing hydrophilic polar groups to the water-insoluble resin. Although there is no particular limitation to the water-insoluble resin used as feedstock, it is desirable to use a water-insoluble resin obtained from inexpensive general-purpose monomers. These general-purpose water-insoluble resins may be those now explained. Specifically, the organic liquids that may be absorbed with the organic liquid absorbent resin, obtained by the present invention, are the same as those shown above.

### Industrial Applicability

According to the present invention, such a resin which is optimum in solvent absorbency may be produced. The solvent absorbent resin may be produced even from used general-purpose resin or waste liquid, such as waste sulfuric acid, to contribute to effective utilization of resources and hence to protection of global environment.

Although the solvent-absorbing resin of the present invention has many usages, it may be useful as a processing agent for a waste solvent discharged from a plant, for example, as an emergency processing agent on occurrence of leakage of a solvent storage tank.

The organic liquid absorbent unit of the present invention is obtained by causing the organic liquid absorbent resin to be present in the organic liquid permeating pouch. The organic liquid absorbent resin may be produced by introducing hydrophilic polar groups to the water-insoluble resin and contains a modified high molecular compounds which takes on a gelated state on liquid absorption. Thus, the organic liquid absorbent unit according to the present invention is able to absorb a wide range of the various organic liquids to prevent leakage of an organic liquid from a storage area or to outside the plant more effectively than with the organic liquid absorbent unit.

Moreover, in use, the organic liquid absorbent unit of the present invention, which is small in weight and size during transport, absorbs the organic liquids to fulfil the function as to weight and size and as to shape followup, while it is less prone to collapsing during transport and storage.

Additionally, the organic liquid absorbent unit of the present invention is obtained by causing the organic liquid absorbent resin to be present in the organic liquid permeating pouch. The organic liquid absorbent resin may be produced by introducing hydrophilic polar groups to the water-insoluble resin, and contains a modified high molecular compounds which take on a gelated state on liquid absorption. Thus, the organic liquid absorbent unit according to the present invention is able to absorb a wide range of the various organic liquids to prevent leakage of an organic liquid from a storage area or to outside the plant more effectively than with the organic liquid absorbent unit.

The organic liquid absorbent unit of the present invention, which is small in weight and size during transport, absorbs the organic liquids to meet the requirements as to weight and size and as to shape followup, while it is less prone to collapsing during transport and storage.

The organic liquid absorbent unit of the present invention is small in weight and size during transport, and also contains an attractable substance, so that it may be transported promptly and in large quantities by suction means in meeting with the attractable substance. For example, if the attractable substance is a magnetic material, magnetic attraction means may be used. In use, the organic liquid absorbent unit absorbs the organic liquids to meet the requirements as to weight and size and as to shape followup sufficiently.

According to the transporting method of the present invention, a large quantity of the organic liquid absorbent units can be transported quickly at a time even to hazardous sites for human operators.

The organic liquid absorbent unit according to the present invention is suited to this transporting method. Stated differently, the organic liquid absorbent unit of the present invention, which is small in weight and size during transport, absorbs the organic liquids to meet the requirements as to weight and size and as to shape followup sufficiently. In addition, the organic liquid absorbent unit according to the present invention is able to absorb a wide range of the various organic liquids to prevent leakage of an organic liquid from a storage area or to outside the plant more effectively than with the organic liquid absorbent unit.

The organic liquid absorbent unit of the present invention can be produced from used resin or waste material, while the solid material, with a specific gravity not less than unity, optionally contained, may be produced from waste components difficult to dispose of in the disintegration processing of electronic equipment. Thus, these waste materials can be utilized effectively to contribute to protection of global environment.

## Claims

1. A solvent absorbent resin formed of a water-insoluble resin to which have been introduced hydrophilic polar groups.

2. The solvent absorbent resin according to claim 1 wherein the hydrophilic polar groups are at least one of a sulfo group which is in the form of a salt, a sulfuric acid group which is in the form of a salt, a carboxylic, an amide or a nitro groups, which is in the form of a salt, a -PO(OH)₂ group, which is in the form of a salt, a -OPO(OH)₂ group, which is in the form of a salt, a hydroxyl group, which is in the form of a salt, and an aminic base group, which is in the form of a salt.

3. The solvent absorbent resin according to claim 1 wherein the hydrophilic polar groups are contained in an amount of 0.1 to 99 mol% in the entire monomer units in the water-insoluble resin.

4. The solvent absorbent resin according to claim 1 wherein the water-insoluble resin contains at least one of an aromatic ring and a conjugated diene in a main chain and/or a side chain thereof.

5. The solvent absorbent resin according to claim 4 wherein at least one of the aromatic ring and the conjugated diene contained in the water-insoluble resin accounts for 1 to 100 mol% in the entire monomer units in the resin.

6. A solvent absorbent resin formed of a used water-insoluble resin to which have been introduced hydrophilic polar groups.

7. The solvent absorbent resin according to claim 6 wherein the hydrophilic polar groups are at least one of a sulfo group which is in the form of a salt, a sulfuric acid group which is in the form of a salt, a carboxylic, an amide or a nitro groups, which is in the form of a salt, a -PO(OH)₂ group, which is in the form of a salt, a -OPO(OH)₂ group, which is in the form of a salt, a hydroxyl group, which is in the form of a salt, and an aminic base group, which is in the form of a salt.

8. The solvent absorbent resin according to claim 6 wherein the hydrophilic polar groups are contained in an amount of 0.1 to 99 mol% in the entire monomer units in the water-insoluble resin.

9. The solvent absorbent resin according to claim 6 wherein the water-insoluble resin contains at least one of an aromatic ring and a conjugated diene in a main chain and/or a side chain thereof.

10. The solvent absorbent resin according to claim 9 wherein at least one of the aromatic ring and the conjugated diene contained in the water-insoluble resin accounts for 1 to 100 mol% in the entire monomer units in the resin.

11. A method for producing a solvent absorbent resin comprising introducing hydrophilic groups to a water-insoluble resin.

12. The method for producing a solvent absorbent resin according to claim 11 wherein the hydrophilic polar groups are at least one of a sulfo group which is in the form of a salt, a sulfuric acid group which is in the form of a salt, a carboxylic, an amide or a nitro groups, which is in the form of a salt, a -PO(OH)₂ group, which is in the form of a salt, a -OPO(OH)₂ group, which is in the form of a salt, a hydroxyl group, which is in the form of a salt, and an aminic base group, which is in the form of a salt.

13. The method for producing a solvent absorbent resin according to claim 11 wherein the hydrophilic polar groups are contained in an amount of 0.1 to 99 mol% in the entire monomer units in the water-insoluble resin.

14. The method for producing a solvent absorbent resin according to claim 11 wherein the water-insoluble resin contains at least one of an aromatic ring and a conjugated diene in a main chain and/or a side chain thereof.

15. The method for producing a solvent absorbent resin according to claim 14 wherein at least one of the aromatic ring and the conjugated diene contained in the water-insoluble resin accounts for 1 to 100 mol% in the entire monomer units in the resin.

16. A method for producing a used solvent absorbent resin comprising introducing hydrophilic groups to a water-insoluble resin.

17. The method for producing a solvent absorbent resin according to claim 16 wherein the hydrophilic polar groups are at least one of a sulfo group which is in the form of a salt, a sulfuric acid group which is in the form of a salt, a carboxylic, an amide or a nitro groups, which is in the form of a salt, a -PO(OH)₂ group, which is in the form of a salt, a -OPO(OH)₂ group, which is in the form of a salt, a hydroxyl group, which is in the form of a salt, and an aminic base group, which is in the form of a salt.

18. The method for producing a solvent absorbent resin according to claim 16 wherein the hydrophilic polar groups are contained in an amount of 0.1 to 99 mol% in the entire monomer units in the water-insoluble resin.

19. The method for producing a solvent absorbent resin according to claim 16 wherein the water-insoluble resin contains at least one of an aromatic ring and a conjugated diene in a main chain and/or a side chain thereof.

20. The method for producing a solvent absorbent resin according to claim 19 wherein at least one of the aromatic ring and the conjugated diene contained in the water-insoluble resin accounts for 1 to 100 mol% in the entire monomer units in the resin.

21. A water-insoluble resin into which hydrophilic groups have been introduced.

22. An organic liquid absorbent unit comprising;
an organic liquid absorbent resin, comprised of a water-insoluble resin having hydrophilic polar groups introduced thereto; and
a support member.

23. The organic liquid absorbent unit according to claim 22 wherein said support member is a flexible netted product.

24. The organic liquid absorbent unit according to claim 22 wherein the organic liquid absorbent resin is supported by said support member.

25. An organic liquid absorbent unit comprising;
an organic liquid absorbent resin comprised of a used water-insoluble resin having hydrophilic polar groups introduced thereto; and
a support member.

26. A method for producing an organic liquid absorbent unit, comprising:
charging an organic liquid absorbent resin, obtained on introducing hydrophilic groups to a water-insoluble resin, and a support member, into an organic liquid permeating pouch.

27. The method for producing an organic liquid absorbent unit according to claim 26 wherein said support member is a flexible netted product.

28. The method for producing an organic liquid absorbent unit according to claim 26 wherein the organic liquid absorbent resin is supported by said support member.

29. A method for producing an organic liquid absorbent unit, comprising:
charging an organic liquid absorbent resin, obtained on introducing hydrophilic groups to a used water-insoluble resin, and a support, into an organic liquid permeating pouch.

30. A method for producing an organic liquid absorbent unit, comprising:
charging an organic liquid absorbent resin, obtained on introducing hydrophilic groups to a water-insoluble resin, into an organic liquid permeating pouch.

31. The method for producing an organic liquid absorbent unit according to claim 30 wherein the hydrophilic polar groups are at least one of a sulfo group which is in the form of a salt, a sulfuric acid group which is in the form of a salt, a carboxylic, an amide or a nitro groups, which is in the form of a salt, a -PO(OH)₂ group, which is in the form of a salt, a -OPO(OH)₂ group, which is in the form of a salt, a hydroxyl group, which is in the form of a salt, and an aminic base group, which is in the form of a salt.

32. The method for producing an organic liquid absorbent unit according to claim 30 wherein the hydrophilic polar groups are contained in an amount of 0.1 to 99 mol% in the entire monomer units in the water-insoluble resin.

33. The method for producing an organic liquid absorbent unit according to claim 30 wherein the water-insoluble resin contains at least one of an aromatic ring and a conjugated diene in a main chain and/or a side chain thereof.

34. The method for producing an organic liquid absorbent unit according to claim 30 wherein at least one of the aromatic ring and the conjugated diene contained in the water-insoluble resin accounts for 1 to 100 mol% in the entire monomer units in the resin.

35. A method for producing an organic liquid absorbent unit, comprising:
charging an organic liquid absorbent resin, obtained on introducing hydrophilic groups to a used water-insoluble resin, into an organic liquid permeating pouch.

36. An organic liquid absorbent unit comprising:
an organic liquid absorbent resin comprised of a water-insoluble resin into which hydrophilic polar groups have been introduced; and
an attractable substance.

37. The organic liquid absorbent unit according to claim 36 wherein the attractable substance is a magnetic substance.

38. The organic liquid absorbent unit according to claim 37 wherein the magnetic substance is a waste magnetic substance.

39. The organic liquid absorbent unit according to claim 37 wherein the magnetic member is a waste magnetic substance bonded together.

40. An organic liquid absorbent unit containing
a used organic liquid absorbent resin, to which hydrophilic polar groups have been introduced; and
a magnetic substance.

41. A method for producing an organic liquid absorbent unit comprising:
introducing an organic liquid absorbent resin obtained on introducing hydrophilic groups to a water-insoluble resin, and an attractable substance, into an organic liquid permeating pouch.

42. The method for producing an organic liquid absorbent unit according to claim 41 wherein said attractable substance is a magnetic substance.

43. The method for producing an organic liquid absorbent unit according to claim 42 wherein said attractable substance is a magnetic substance.

44. The method for producing an organic liquid absorbent unit according to claim 42 wherein said magnetic substance is a waste magnetic substance.

45. A method for producing an organic liquid absorbent unit comprising;
charging an organic liquid absorbent resin, obtained on introducing hydrophilic groups to a used water-insoluble resin, and a magnetic substance, into an organic liquid permeating pouch.

46. The method for producing an organic liquid absorbent unit according to claim 45 wherein the attractable substance is a magnetic substance.

47. A method for transporting an organic liquid absorbent unit comprising:
sucking an organic liquid absorbent resin, comprised of a water-insoluble resin, to which hydrophilic polar groups have been introduced, and a magnetic substance.

48. The method for transporting an organic liquid absorbent unit according to claim 47 wherein the organic liquid absorbent resin, comprised of the water-insoluble resin, to which hydrophilic polar groups have been introduced, and the magnetic substance, is sucked magnetically.

49. The method for transporting an organic liquid absorbent unit according to claim 48 wherein the magnetic substance is a waste magnetic substance.

50. The method for transporting an organic liquid absorbent unit according to claim 48 wherein the magnetic substance is a waste magnetic substance bonded together.

51. A method for transporting an organic liquid absorbent unit comprising:
sucking an organic liquid absorbent resin, comprised of a used water-insoluble resin, to which hydrophilic polar groups have been introduced, and a magnetic substance.

52. The method for transporting an organic liquid absorbent unit according to claim 51 wherein the organic liquid absorbent resin, comprised of a used water-insoluble resin, to which hydrophilic polar groups have been introduced, and the magnetic substance, is sucked magnetically.

## Amended claims

### Amended claims under Art. 19.1 PCT

**1.** (Amended) A solvent absorbent resin formed of a water-insoluble resin which contains at least one of an aromatic ring and a conjugated diene in a main chain and/or a side chain, and into which hydrophilic polar groups have been introduced .

**2.** The solvent absorbent resin according to claim 1 wherein the hydrophilic polar groups are at least one of a sulfo group which is in the form of a salt, a sulfuric acid group which is in the form of a salt, a carboxylic, an amide or a nitro groups, which is in the form of a salt, a -PO(OH)₂ group, which is in the form of a salt, a -OPO(OH)₂ group, which is in the form of a salt, a hydroxyl group, which is in the form of a salt, and an aminic base group, which is in the form of a salt.

**3.** The solvent absorbent resin according to claim 1 wherein the hydrophilic polar groups are contained in an amount of 0.1 to 99 mol% in the entire monomer units in the water-insoluble resin.

**4.** (Deleted)

**5.** The solvent absorbent resin according to claim 4 wherein at least one of the aromatic ring and the conjugated diene contained in the water-insoluble resin accounts for 1 to 100 mol% in the entire monomer units in the resin.

**6.** A solvent absorbent resin formed of a used water-insoluble resin to which have been introduced hydrophilic polar groups.

**7.** The solvent absorbent resin according to claim 6 wherein the hydrophilic polar
